# EUROPEAN PATENT SPECIFICATION

(11) **EP 3 805 731 B1**
(45) Date of publication and mention of the grant of the patent: **20.11.2024**
(21) Application number: 20200222.6
(22) Date of filing: 06.10.2020
(51) Int. Cl.: G01N 19/02

(54) **ARRANGEMENT TO BE INSTALLED ON A VEHICLE AND TO BE USED FOR ACTIVITIES ON A ROAD SURFACE**
ANORDNUNG FÜR DIE INSTALLATION AUF EINEM FAHRZEUG UND FÜR AKTIVITÄTEN AUF EINER STRASSENOBERFLÄCHE
DISPOSITIF À INSTALLER SUR UN VÉHICULE ET À UTILISER POUR DES ACTIVITÉS SUR UNE SURFACE D'UNE ROUTE

(30) Priority: 08.10.2019 FI 20195862
(43) Date of publication of application: 14.04.2021
(73) Proprietor: Moventor Oy, 36220 Kangasala (FI)
(72) Inventor: Viinikainen, Santeri, 36220 Kangasala (FI)
(74) Representative: Kolster Oy Ab

(56) References cited:
- WO-A1-00/36397
- US-A1- 2008 236 268
- US-A1- 2018 059 002
- US-B2- 10 232 757

## Description

### Background

The application relates to an arrangement comprising a shock absorbing structure. Document US 2018/059002 A1 discloses a method of determination of friction coefficient between wheel and surface and its implementation device. Document WO 00/36397 A1 discloses a friction measurement device for a vehicle and utilization thereof. Document US 2008/236268 A1 discloses an apparatus and method for determining a predicted vehicle braking operation. Document US 10 232 757 B2 discloses a pick-up truck cargo lift system and method.

### Brief disclosure

The goal is a new type of arrangement which comprises a shock absorbing structure. The characterising features of the invention are disclosed in the independent claims.

The arrangement comprises a device pressing against the ground, a shock absorbing cradle, and an electric motor. The electric motor is configured to control the device pressing against the ground, and to convey the force that is exerted from the ground on the device pressing against the ground to the shock absorbing cradle.

### Brief description of the drawings

The invention will now be described in closer detail in connection with the preferred embodiments of which:
Figure 1 shows an example of the arrangement in a first position;
Figure 2 shows an example of the arrangement in a second position;
Figure 3 shown an example of an embodiment of the device.

### Detailed description of the figures

The presented embodiments relate to an arrangement comprising a device pressing against the ground, a shock absorbing cradle, and an electric motor. The electric motor is configured to control the device pressing against the ground, and to convey the force exerted on the device pressing against the ground from the ground to the shock absorbing cradle.

The arrangement may be used for activities aimed on a road surface. For example, the arrangement may be used to check the slipperiness of roads, runways at airports, and other areas. As a second example, the arrangement may be used for making road markings.

In an embodiment, the device pressing against the ground comprises a device fixed to a vehicle and which device pressing against the ground is used while the vehicle is moving.

In an embodiment, the device pressing against the ground comprises a friction-measuring apparatus. The friction-measuring apparatus may comprise a measuring device for establishing the friction coefficient of a road surface. Based on the determined friction coefficient, the need for anti-skid activities of the road surface, for example, may be evaluated.

In an embodiment, the device pressing against the ground comprises a treatment device of a road surface. The treatment device of a road surface comprises, for example, a washing device, road marking device, or another treatment device of a road surface.

The device pressing against the ground comprises at least two positions. In an embodiment the first position comprises an upper position. In an embodiment the upper position comprises a transport position in which the device pressing against the ground is not used for activities aimed at a road surface, such as friction measurements. In an embodiment the second position comprises a lower position. In an embodiment, the lower position comprises a measuring position in which the device pressing against the ground is used for activities aimed at a road surface. In a second embodiment, the first position comprises a lower position and the second position comprises an upper position.

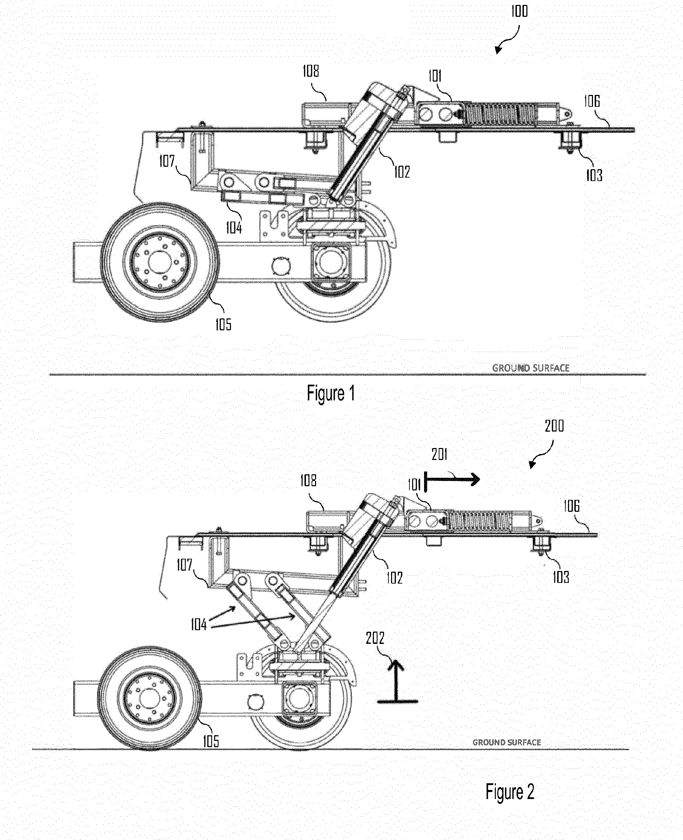

Figure 1 shows an example of an arrangement 100 according to an embodiment. The arrangement comprises a device pressing against the ground 105, a shock absorbing cradle 101, and an electric motor 102. In the example of Figure 1, the apparatus 100 additionally comprises a main body 108, auxiliary body 107, and linkage 104. Furthermore, in the example of Figure 1, the arrangement 100 comprises fastening means 103 to fix the arrangement 100 onto a horizontally installed platform 106. The fastening means 103 may comprise mechanical, detachable fastening means such as bolts, or fixed fastening means such as a fastening plate by means of which the apparatus 100 may be fastened to the horizontally installed platform 106.

The horizontally installed platform 106 comprises a platform which in parallel to the ground. In an embodiment, the horizontally installed platform 106 comprises a cargo bed of a vehicle. For example, the cargo bed of a vehicle may comprise a cargo bed of a pickup truck. In a second embodiment, the horizontally installed platform 106 comprises a platform in a cargo compartment of vehicle, such as the floor of a van's cargo compartment.

An advantage of fastening the apparatus 100 on the cargo bed of a vehicle, or in the cargo compartment thereof, is that there is no need for dedicated devices to transport, use, and/or store of the arrangement 100, but the arrangement 100 moves with the vehicle. In addition, if the vehicle cabin has a window towards the cargo bed or cargo compartment of the vehicle, the driver is able to monitor the operation of the arrangement 100 through the window.

The purpose of the shock absorbing cradle 101 is to dampen the shocks that the device pressing against the ground 105 is subjected to so that the device pressing against the ground 105 could be used in an undisturbed as possible a manner. The impacts on the device pressing against the ground 105 may be caused by the roughness of the ground, such as holes or bumps.

In an embodiment, the shock absorbing cradle 101 comprises at least one shock absorbing element. The shock absorbing element comprises an element which is arranged to receive a force-induced impact and to dampen the impact. The shock absorbing element may comprise, for example, a spring, cylinder, or another shock absorbing element. In an embodiment, the shock absorbing cradle 101 comprises at least two shock absorbing elements installed in parallel.

In an embodiment, the shock absorbing cradle 101 is provided with a suspension. The suspension may be mechanical, hydraulic, or pneumatic, for example. In an embodiment the shock absorbing cradle is mechanically suspended. When the shock absorbing cradle 101 is moving horizontally, the springs compress and thus absorb impacts directed at the device pressing against the ground 105.

An advantage of a mechanically-suspended shock absorbing cradle is that it does not require a complicated installation. Mechanical shock absorption is typically more economical to manufacture and often more reliable than hydraulic or pneumatic shock absorption. In addition, a mechanically-suspended shock absorbing cradle is easier to service than, for example, hydraulic or pneumatic shock absorbing cradles.

In an embodiment, the shock absorbing cradle 101 is configured so that the shock absorbing cradle 101 moves horizontally in response to a force that the shock absorbing cradle 101 is subjected to. In an embodiment, the shock absorbing cradle 101 moves horizontally in relation to the horizontally installed platform 106. The horizontal movement may comprise horizontal movement in relation to the ground surface, that is, movement parallel to the ground surface. The horizontal movement may also comprise horizontal movement in relation to the horizontally installed platform 106, in other words movement that is parallel to the horizontally installed platform 106. In an embodiment, the shock absorbing cradle 101 is installed on the horizontally installed platform 106, such as the cargo bed or cargo compartment of a vehicle.

An advantage of horizontal movement of the shock absorbing cradle is that when installing the shock absorbing cradle 101, the cargo bed or cargo compartment of a vehicle, for example, may be utilized. In addition, the shock absorbing cradle 101 according to Figure 1 is more stable and takes less space vertically than, for example, a vertically installed shock absorbing cradle.

In an embodiment, the shock absorbing cradle 101 comprises a main body 108. The main body 108 may be fixed by fastening means 103 to the horizontally installed platform 106. The main body 108 may be fixed on the horizontally installed platform 106, embedded at least partly in the platform 106, or integrated into the platform 106. In an embodiment, the shock absorbing cradle 101 comprises fastening means 103 to fasten the shock absorbing cradle on the horizontally installed platform 106.

In an embodiment, the shock absorbing cradle 101 is configured to move in relation to the main body 108. In an embodiment, the main body 108 comprises a groove, and the shock absorbing cradle 101 is arranged to slide in the groove of the main body 108. In an embodiment, the shock absorbing cradle 101 is provided with a bearing.

In an embodiment, the device pressing against the ground 105 is installed under the horizontally installed platform 106. For example, if the horizontally installed platform 106 comprises a cargo bed of a vehicle, the cargo bed may comprise an opening, and the arrangement 100 is so installed that the shock absorbing cradle 101 is installed on the cargo bed and the device pressing against the ground 105 is installed below the cargo bed. If, on the other hand, the horizontally installed platform 106 comprises a van's cargo compartment, the floor of the cargo compartment may comprise an opening, and the arrangement 100 is installed so that the shock absorbing cradle 101 is installed in the van's cargo compartment, and the device pressing against the ground 105 is installed under the floor of the cargo compartment.

An advantage of installing the device pressing against the ground 105 below the horizontally installed platform 106 is that the device pressing against the ground 105 is quick to switch from the upper position to the lower position and from the lower position to the upper position.

In an embodiment, the electric motor 102 is configured to control the device pressing against the ground 105. Controlling the device pressing against the ground 105 may comprise, for example, controlling the device 105 to a specific position by means of the electric motor 102, linkage 104, and auxiliary body 107. Controlling to a specific position may comprise, for example, raising and/or lowering the device pressing against the ground 105. The electric motor 102 may be an electric linear actuator, for example.

In an embodiment, the electric motor 102 is configured to control the device pressing against the ground 105 from a first position to a second position. The first position may comprise an upper position, for example. The second position may comprise a lower position, for example. In the example of Figure 1, the arrangement 100 is in the upper position.

In the example of Figure 2, the arrangement 100 is in the lower position. The device pressing against the ground 105 may be pressed against the surface of the ground by means of the electric motor 102 and linkage 104. The purpose of the linkage 104 is to keep the device pressing against the ground 105 horizontal, when the device pressing against the ground 105 is raised and/or lowered by means of the electric motor 102.

In an embodiment, the electric motor 102 is configured to press the device pressing against the ground 105 against the ground surface. The electric motor 102 is configured to press the device pressing against the ground 105 against the ground surface so that the use of the device 105 is possible. On the other hand, pressing must be so chosen that pressing is not too hard. Excessive pressing causes unnecessary loading on the arrangement 100.

In an embodiment, the electric motor 102 is additionally configured to convey the force exerted on the device pressing against the ground 105 from the ground to the shock absorbing cradle 101. The electric motor 102 is fastened to the shock absorbing cradle 101, which moves horizontally.

In an embodiment, the shock absorbing cradle 101 is so installed that in response to the force transmitted by the electric motor, the shock absorbing cradle 101 moves in the direction of the horizontally installed platform 106.

In the example of Figure 2, the arrow 202 illustrates the force that is exerted from the ground on the device pressing against the ground 105. When the device pressing against the ground 105 drives over a bump, for example, the force 202 is exerted on the device pressing against the ground 105. The electric motor 102 conveys the force 202 to the shock absorbing cradle 101, which moves horizontally. In the example of Figure 2, the arrow 201 illustrates the force that is transmitted to the shock absorbing cradle 101 by the electric motor 102. When the shock absorbing cradle 101 moves horizontally by the effect of the force 201, the springs of the shock absorbing cradle 101 compress. The larger the force 202 that is exerted on the device pressing against the ground 105 is, the more the springs compress.

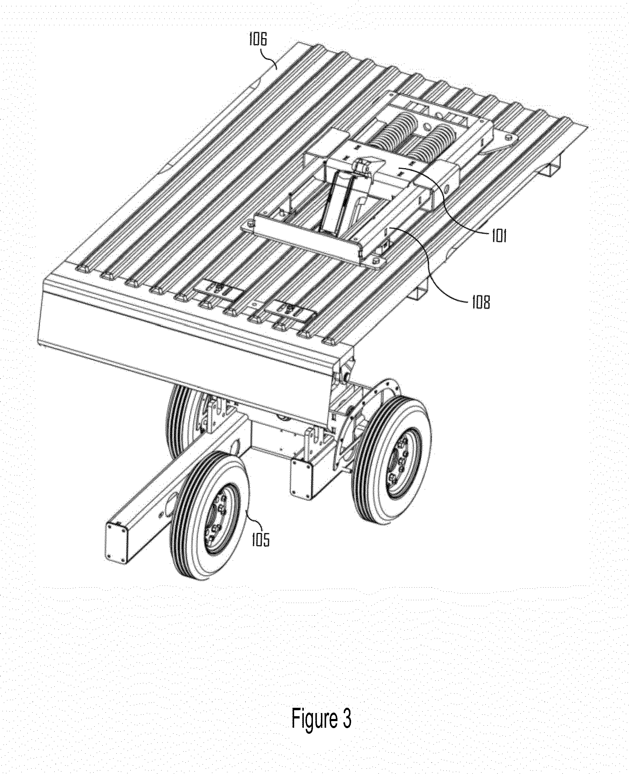

Figure 3 shows an embodiment of the arrangement 100. In the example of Figure 3, the shock absorbing cradle 101 comprises a main body 108. The shock absorbing cradle 101 is equipped with a bearing and the shock absorbing cradle 101 is so installed that is slides in the groove of the main body 108 in relation to the main body.

In the example of Figure 3, the shock absorbing cradle 101 is installed on top of the horizontally installed platform 106, and the device pressing against the ground 105 under the horizontally installed platform 106.

An advantage of the disclosed arrangement is that the arrangement is independent of the installation platform so that it may easily be installed on a cargo bed of a vehicle, for example. An additional advantage is that the arrangement may be installed on a plurality of different vehicles, such as the cargo bed of a pickup truck or cargo compartment of a van. The arrangement may also be transferred from one vehicle to another. A further advantage is also that the arrangement may be quickly controlled from the upper position to the lower position and from the lower position to the upper position. Yet another advantage is that the arrangement does not require a lot of space.

Those skilled in the art will find it obvious that, as technology advances, the basic idea of the invention may be implemented in many different ways. The invention and its embodiments are thus not restricted to the above-described examples but may vary within the scope of the claims.

## Claims

1. An arrangement (100) to be installed on a vehicle, the arrangement (100) comprising a device pressing against the ground (105),
a shock absorbing cradle (101), and
an electric motor (102) which is configured to press the device pressing against the ground (105) against the surface of the ground, **characterised in that** the electric motor (102) is additionally configured to convey the force (202) exerted on the device pressing against the ground (105) from the ground to the shock absorbing cradle (101), that the shock absorbing cradle (101) comprises fastening means (103) to fasten the shock absorbing cradle (101) on a horizontally installed platform (106), wherein optionally the horizontally installed platform (106) comprises a cargo bed of a vehicle, and that the shock absorbing cradle (101) is installed so that in response to the force transmitted by the electric motor (102) the shock absorbing cradle (101) moves horizontally in the direction of the horizontally installed platform (106).

2. An arrangement (100) as claimed in claim 1, wherein the shock absorbing cradle (101) comprises a main body (108), and the shock absorbing cradle (101) is installed so that it moves in relation to the main body (108).

3. An arrangement (100) as claimed in claim 2, wherein the main body (108) comprises a groove, and the shock absorbing cradle (101) is arranged to slide in the groove of the main body (108).

4. An arrangement (100) as claimed in any one of the preceding claims, wherein the shock absorbing cradle (101) is provided with a bearing.

5. An arrangement (100) as claimed in any one of the preceding claims, wherein the shock absorbing cradle (101) is provided with a suspension.

6. An arrangement (100) as claimed in claim 5, wherein the shock absorbing cradle (101) is mechanically suspended.

7. An arrangement (100) as claimed in any one of the preceding claims, wherein the device pressing against the ground (105) is installed below the horizontally installed platform (106).

8. An arrangement (100) as claimed in any one of the preceding claims, wherein the device pressing against the ground (105) comprises a friction measuring apparatus.

9. An arrangement (100) as claimed in any one of the preceding claims 1 to 7, wherein the device pressing against the ground (105) comprises a treatment device of a road surface.

10. An arrangement (100) as claimed in any one of the preceding claims, wherein the electric motor (102) comprises a linear actuator.

## Patentansprüche

1. Anordnung (100), die auf einem Fahrzeug zu installieren ist, wobei die Anordnung (100) eine Vorrichtung umfasst, die gegen den Boden (105) drückt,
ein stoßdämpfendes Gestell (101), und
einen Elektromotor (102), der dazu ausgelegt ist, die Vorrichtung, die gegen den Boden (105) drückt, gegen die Fläche des Bodens zu drücken, **dadurch gekennzeichnet, dass** der Elektromotor (102) zusätzlich dazu ausgelegt ist, die Kraft (202), die auf die Vorrichtung ausgeübt wird, die gegen den Boden drückt (105), vom Boden auf das stoßdämpfende Gestell (101) zu übertragen, dass das stoßdämpfende Gestell (101) Befestigungsmittel (103) zum Befestigen des stoßdämpfenden Gestells (101) an einer horizontal installierten Plattform (106) umfasst, wobei wahlweise die horizontal installierte Plattform (106) ein Lastenbett eines Fahrzeugs umfasst, und dass das stoßdämpfende Gestell (101) derart installiert ist, dass in Reaktion auf die Kraft, die vom Elektromotor (102) übermittelt wird, das stoßdämpfende Gestell (101) sich horizontal in die Richtung der horizontal installierten Plattform (106) bewegt.

2. Anordnung (100) nach Anspruch 1, wobei das stoßdämpfende Gestell (101) einen Hauptkörper (108) umfasst und das stoßdämpfende Gestell (101) derart installiert ist, dass es sich mit Bezug auf den Hauptkörper (108) bewegt.

3. Anordnung (100) nach Anspruch 2, wobei der Hauptkörper (108) eine Nut umfasst und das stoßdämpfende Gestell (101) angeordnet ist, in der Nut des Hauptkörpers (108) zu gleiten.

4. Anordnung (100) nach einem der vorhergehenden Ansprüche, wobei das stoßdämpfende Gestell (101) mit einem Lager versehen ist.

5. Anordnung (100) nach einem der vorhergehenden Ansprüche, wobei das stoßdämpfende Gestell (101) mit einer Aufhängung versehen ist.

6. Anordnung (100) nach Anspruch 5, wobei das stoßdämpfende Gestell (101) mechanisch aufgehängt ist.

7. Anordnung (100) nach einem der vorhergehenden Ansprüche, wobei die Vorrichtung, die gegen den Boden (105) drückt, an der horizontal installierten Plattform (106) installiert ist.

8. Anordnung (100) nach einem der vorhergehenden Ansprüche, wobei die Vorrichtung, die gegen den Boden (105) drückt, eine Reibungsmessvorrichtung umfasst.

9. Anordnung (100) nach einem der vorhergehenden Ansprüche 1 bis 7, wobei die Vorrichtung, die gegen den Boden (105) drückt, eine Behandlungseinsrichtung einer Straßenoberfläche umfasst.

10. Anordnung (100) nach einem der vorhergehenden Ansprüche, wobei der Elektromotor (102) einen Linearaktuator umfasst.

## Revendications

1. Agencement (100) destiné à être installé sur un véhicule, l'agencement (100) comprenant un dispositif s'appuyant contre le sol (105),
un berceau d'amortissement (101), et
un moteur électrique (102) qui est configuré pour comprimer le dispositif s'appuyant contre le sol (105) contre la surface du sol, **caractérisé en ce que** le moteur électrique (102) est de plus configuré pour transporter la force (202) exercée sur le dispositif s'appuyant contre le sol (105) du sol jusqu'au berceau d'amortissement (101), de sorte que le berceau d'amortissement (101) comprend un moyen de fixation (103) pour fixer le berceau d'amortissement (101) sur une plateforme installée horizontalement (106), dans lequel facultativement la plateforme installée horizontalement (106) comprend un plateau de chargement d'un véhicule et **en ce que** le berceau d'amortissement (101) est installé de sorte qu'en réponse à la force transmise par le moteur électrique (102), le berceau d'amortissement (101) se déplace horizontalement dans la direction de la plateforme installée horizontalement (106).

2. Agencement (100) selon la revendication 1, dans lequel le berceau d'amortissement (101) comprend un corps principal (108), et le berceau d'amortissement (101) est installé de sorte qu'il se déplace par rapport au corps principal (108).

3. Agencement (100) selon la revendication 2, dans lequel le corps principal (108) comprend une rainure, et le berceau d'amortissement (101) est agencé pour coulisser dans la rainure du corps principal (108).

4. Agencement (100) selon l'une quelconque des revendications précédentes, dans lequel le berceau d'amortissement (101) est prévu avec un palier.

5. Agencement (100) selon l'une quelconque des revendications précédentes, dans lequel le berceau d'amortissement (101) est prévu avec une suspension.

6. Agencement (100) selon la revendication 5, dans lequel le berceau d'amortissement (101) est mécaniquement suspendu.

7. Agencement (100) selon l'une quelconque des revendications précédentes, dans lequel le dispositif s'appuyant contre le sol (105) est installé au-dessous de la plateforme installée horizontalement (106).

8. Agencement (100) selon l'une quelconque des revendications précédentes, dans lequel le dispositif s'appuyant contre le sol (105) comprend un appareil de mesure de friction.

9. Agencement (100) selon l'une quelconque des revendications 1 à 7, dans lequel le dispositif s'appuyant contre le sol (105) comprend un dispositif de traitement d'une surface routière.

10. Agencement (100) selon l'une quelconque des revendications précédentes, dans lequel le moteur électrique (102) comprend un actionneur linéaire.
